# EUROPÄISCHE PATENTSCHRIFT

(11) **EP 2 411 161 B1**
(45) Veröffentlichungstag und Bekanntmachung des Hinweises auf die Patenterteilung: **29.07.2015**
(21) Anmeldenummer: 10710327.7
(22) Anmeldetag: 24.03.2010
(51) Int. Cl.: B05D 1/40, B05D 3/02, B32B 37/15, B32B 38/06, B05D 1/26, B05D 5/02, B32B 37/08, B32B 37/20, B32B 38/16, C23G 1/00, B32B 38/00

(54) **EXTRUSIONSBESCHICHTETES BAND FÜR STARRE VERPACKUNGEN**
EXTRUSION-COATED STRAP FOR RIGID PACKAGINGS
BANDE REVÊTUE PAR EXTRUSION POUR EMBALLAGES RIGIDES

(30) Priorität: 26.03.2009 DE 102009003683
(43) Veröffentlichungstag der Anmeldung: 01.02.2012
(73) Patentinhaber: Hydro Aluminium Rolled Products GmbH, 41515 Grevenbroich (DE)
(72) Erfinder: SIEMEN, Andreas, 41363 Jüchen (DE); SCHUBERT, Günter, 53359 Rheinbach (DE); KASPER, Boris, 42781 Haan (DE); SCHWARZ, Jochen, 41849 Wassenberg (DE); MATEO, Antonio, 41515 Grevenbroich (DE)
(74) Vertreter: Cohausz & Florack
(86) Internationale Anmeldenummer: PCT/EP2010/053833
(87) Internationale Veröffentlichungsnummer: WO 2010/108953

(56) Entgegenhaltungen:
- EP-A1- 1 010 641
- EP-A1- 1 362 653
- WO-A1-96/32202
- WO-A1-98/33601
- US-A- 2 961 336
- US-A- 5 537 851
- US-B1- 6 673 391

## Beschreibung

Die Erfindung betrifft ein Verfahren zur Herstellung eines beschichteten Aluminiumbandes, bei welchem das Aluminiumband von einem Coil abgewickelt und einem ein- oder beidseitigen Extrusionsbeschichten zugeführt wird, das Aluminiumband mit einem thermoplastischen Kunststoff extrusionsbeschichtet wird und das Aluminiumband nach dem Extrusionsbeschichten auf eine Metalltemperatur oberhalb der Schmelzpunkttemperatur des thermoplastischen Kunststoffes nachgewärmt wird. Darüber hinaus betrifft die Erfindung ein entsprechend hergestelltes Aluminiumband sowie dessen erfindungsgemäße Verwendung.

Aluminiumbänder, welche für die Herstellung von Getränkedosen, insbesondere zur Herstellung von Dosendeckeln verwendet werden, müssen vor den aggressiven Inhalten der Getränkedosen korrosionsgeschützt werden. Dies erfolgt über eine Beschichtung des für die Herstellung des Dosendeckels verwendeten Aluminiumbandes. Bisher wurden für die Beschichtung des Dosendeckelbandes Lacksysteme verwendet, welche nach dem Auftragen einen Einbrennvorgang durchlaufen müssen. Neben dem hohen Lösungsmittelverbrauch und der aufwendigen Entsorgung der Abluft solcher Anlagen, erfordern die Lacksysteme auch relativ hohe Einbrenntemperaturen im Bereich von 230 bis 270 °C, sodass das Aluminiumband eine deutliche Entfestigung erfährt. Um noch die ausreichenden Stabilitäten bzw. Festigkeiten zur Verfügung zu stellen müssend daher teure, hoch magnesiumreiche Aluminiumlegierungen verwendet werden, die darüber hinaus korrosionsanfälliger sind. Aus der internationalen Patentanmeldung WO 96/32202 ist bekannt, das Dosendeckelband mit einer Extrusionsbeschichtung zu versehen. Hierzu wird das Aluminiumband zuerst einer Vorwärmung unterzogen und anschließend über eine Extrusionsvorrichtung ein- oder beidseitig beschichtet. Anschließend durchläuft das Aluminiumband einen Kühlprozess, bei welchem es annähernd auf Raumtemperatur abgekühlt wird. Erst nach dem vollständigen Auskühlen auf Raumtemperatur tritt das Aluminiumband in Kontakt mit weiteren Bandführungswalzen, welche das Aluminiumband zum Aufwickeln weiterbefördern. Das extrusionsbeschichtete Aluminiumband muss jedoch zur Herstellung von Dosendeckeln unterschiedlichen Umformungen, d.h. Präge- und Stanzschritten unterzogen werden. Hierzu durchläuft das Aluminiumband bei der Herstellung von Dosendeckeln ein Folgeverbundwerkzeug mit hoher Geschwindigkeit, in welchem die einzelnen Arbeitsschritte mit extrem geringen Taktzeiten durchgeführt werden. Obwohl die Hafteigenschaften der aus der oben genannten internationalen Patentanmeldung bekannten Extrusionsbeschichtung ausreichend sein mögen, zeigten sich bei der Verarbeitung von extrusionsbeschichteten Aluminiumbändern im Folgeverbundwerkzeug deutliche Probleme insbesondere dann, wenn hohe Produktionsgeschwindigkeiten eingestellt wurden. Die Verarbeitung von extrusionsbeschichteten Aluminiumbändern zu Dosendeckeln mit sehr hohen Verarbeitungsgeschwindigkeiten war bis dahin deshalb nicht ohne Einbußen in der Verarbeitungsgeschwindigkeit möglich.

Aus der europäischen Patentanmeldung EP 1 010 641 A1 ist die Texturierung der Oberfläche einer extrusionsbeschichteten, siegelfähigen Metallfolie bekannt.

Der Erfindung liegt damit die Aufgabe zugrunde, ein Verfahren zur Herstellung eines Aluminiumbandes zur Verfügung zu stellen, mit welchem ein extrusionsbeschichtetes Aluminiumband hergestellt werden kann, das mit hohen Verarbeitungsgeschwindigkeiten in Folgeverbundwerkzeugen verarbeitet werden kann. Darüber hinaus liegt der vorliegenden Erfindung die Aufgabe zugrunde, ein entsprechendes Aluminiumband sowie dessen vorteilhafte Verwendung vorzuschlagen.

Gemäß einer ersten Lehre der vorliegenden Erfindung wird die oben aufgezeigte Aufgabe dadurch gelöst, dass die nach dem Nachwärmen noch weiche, ein- oder beidseitige Kunststoffbeschichtung des Aluminiumbandes unter Verwendung von eine Oberflächenstruktur aufweisenden Walzen texturiert wird.

Überraschenderweise hat es sich herausgestellt, dass bei der Texturierung der Oberflächen der nach dem Nachwärmen noch weichen thermoplastischen Kunststoffbeschichtung die Reibungseigenschaften des Aluminiumbandes signifikant verbessert werden können. Über die Texturierung der Oberfläche der Kunststoffbeschichtung des Aluminiumbandes kann Einfluss auf die Gleiteigenschaften des Aluminiumbandes im Weiterverarbeitungsprozess genommen werden, so dass diese für die Verarbeitung in Folgeverbundwerkzeugen optimal eingestellt werden kann. Zusätzlich können auch in dem verwendeten thermoplastischen Kunststoff Additive zugesetzt sein, welche die Gleiteigenschaften des beschichteten Aluminiumbandes weiter verbessern.

Eine besonders genaue Abformung der Texturierung der Walzen wurde gemäß einer ersten Ausgestaltung des erfindungsgemäßen Verfahrens dadurch erzielt, dass die zur Texturierung verwendeten Walzen temperiert sind. Temperierte Walzen können in ihrer Oberflächentemperatur gezielt auf die Temperatur des Aluminiumbandes bzw. der Kunststoffbeschichtung nach dem Nachwärmen zur Erzielung einer besonders guten Abformung in ihrer Temperatur eingestellt werden. Sollen beispielsweise die Walzen der Kunststoffbeschichtung gleichzeitig das Aluminiumband kühlen, werden gekühlte Walzen zur Texturierung der Kunststoffbeschichtung verwendet. Darüber hinaus besteht die Möglichkeit, durch beheizte Walzen den Temperaturverlust des Aluminiumbandes nach dem Nachwärmen auszugleichen, um eine ausreichende Abformung zu erzielen. Der Grad der Übertragung der Textur in die Beschichtung ist dabei präzise durch die Nachgiebigkeit der angeschmolzenen Kunststoffbeschichtung als auch durch die Anpressdrücke der Walzen einstellbar.

Weisen die zur Texturierung verwendeten Walzen eine isotrope Textur oder eine unter Verwendung des Elektron-Discharge-Verfahren eingebrachte (EDT)- Oberflächenstruktur auf, werden besonders gute Ergebnisse im Hinblick auf die Erzielung einer maximalen Verarbeitungsgeschwindigkeit im Folgeverbundwerkzeug erreicht. Die EDT-Oberflächenstruktur der Walzen besteht aus feinsten, isotrop verteilten Mulden im Mikrometerbereich, welche zu einer entsprechenden Oberflächenrauhigkeit auf der Extrusionsbeschichtung des Aluminiumbandes führt. Alternativ können auch andere Texturieungsverfahren eingesetzt werden, die adäquate isotrope Oberflächenstrukturierungen ergeben.

Gemäß einer weiteren vorteilhaften Ausführungsform des erfindungsgemäßen Verfahrens beträgt die Rauhigkeit Rₐ der Kunststoffbeschichtung nach der Texturierung 0,02 µm bis 10 µm. Bei diesen Rauhigkeitswerten ermöglicht das Aluminiumband eine maximale Verarbeitungsgeschwindigkeit im Folgeverbundwerkzeug.

Um die in das extrusionsbeschichtete Aluminiumband eingebrachte Textur möglichst präzise einzubringen und bei der weiteren Verarbeitung nicht zu beschädigen, wird das extrusionsbeschichtete Aluminiumband nach dem Texturieren,im Bedarfsfall zusätzlich zu dem verwendeten temperierten Texturierungswalzen, unter Verwendung einer Luft- und/oder Wasserkühlung gekühlt. Vorzugsweise wird das Aluminiumband dabei auf etwa Raumtemperatur abgekühlt, so dass die thermoplastische Kunststoffbeschichtung vollständig erstarrt.

Gemäß einer weiteren vorteilhaften Ausführungsform des erfindungsgemäßen Verfahrens beträgt die Dicke der Kunststoffbeschichtung 0,2 µm bis 20 µm, sodass einerseits ein sehr geringer Materialeinsatz erfolgt und andererseits eine ausreichende Schutzwirkung, beispielsweise gegen korrosive Einflüsse des Inhalts der Getränkedose auf das Aluminiumband, verhindert werden. Es hat sich zudem gezeigt, dass Aluminiumbänder mit thermoplastischen Kunststoffbeschichtungen mit Dicken von 0,2 µm bis 20 µm auch sehr gut, beispielsweise zu Dosendeckeln, weiterverarbeitet werden können.

Vorzugsweise wird ein Polypropylen oder ein Polypropylenblend für die Kunststoffbeschichtung verwendet. Polypropylen weist vor allem sehr gute Barriereeigenschaften gegenüber korrosiven Flüssigkeiten auf und ist mit hohen Geschwindigkeiten auf ein Aluminiumband extrudierbar. Polypropylenbeschichtungen erfordern zudem beim Nachwärmen geringere Metalltemperaturen. So reicht beispielsweise eine PMT (Peak-Metal-Temperature) von mehr als 165 °C aus, um eine Texturierung und gleichzeitig eine Verbesserung der Haftung des extrudierten Kunststoffschicht zu erzielen. Sehr gute Ergebnisse wurden etwa 30 °C oberhalb der Schmelzpunkttemperatur des verwendeten Kunststoffs bei Polypropylen im Bereich von 195 °C bis 210 °C erzielt. Aufgrund der im Vergleich zum Lacksystem deutlich niedrigeren Nachwärmtemperatur bleibt die Entfestigung des Aluminiumbandes gering, so dass Aluminiumlegierungen mit geringeren Mg-Gehalten einsetzbar werden.

Gemäß einer weiteren Ausführungsform des erfindungsgemäßen Verfahrens wird das Aluminiumband vor dem ein- oder beidseitigen Extrusionsbeschichten einem Reinigen, einem Entfetten, einem Beizen sowie einer Vorbehandlung durch Aufbringen einer Konversionsschicht oder einem Anodisieren unterzogen. Eine entsprechende Vorbehandlung des Aluminiumbandes ermöglicht, dass das erfindungsgemäße Verfahren ohne ein Vorwärmen vor dem Extrusionsbeschichten auskommt, da die Hafteigenschaften der Kunststoffbeschichtung auf dem Aluminiumband so deutlich verbessert sind. Insbesondere werden aber auch die Korrosionseigenschaften deutlich verbessert, da durch das Abbeizen der Oberfläche des Aluminiumbandes während des Walzvorganges entstehender Aluminiumabrieb, Ausscheidungen der Legierungselemente und die Oxidhaut sehr gründlich entfernt werden und sich eine homogene Aluminiumoberfläche ausbilden kann.

Eine Verbesserung der Haftung der thermoplastischen Kunststoffbeschichtung auf dem Aluminiumband wird gemäß einer weiteren Ausführungsform des erfindungsgemäßen Verfahrens dadurch erreicht, dass während der Extrusionsbeschichtung neben der thermoplastischen Kunststoffbeschichtung eine Haftvermittlerschicht coextrudiert wird. Durch die Coextrusion von Haftvermittlerschicht und Kunststoffbeschichtung wird bei weiterer Verbesserung der Hafteigenschaften der Kunststoffbeschichtung auf dem Aluminiumband erreicht, dass keine zwei Arbeitsgänge zum Auftragen der Haftvermittlerschicht und der Kunststoffbeschichtung benötigt werden.

Darüber hinaus ist das Verfahren besonders vorteilhaft, wenn ein Dosendeckelband, insbesondere für Getränkedosen, hergestellt wird. Wie bereits ausgeführt, unterliegen die zur Herstellung des Dosendeckels verwendeten Aluminiumbänder einer Vielzahl von Umformvorgängen, welche besonders gute Gleiteigenschaften des beschichteten Aluminiumbandes erfordern, um hohe Verarbeitungsgeschwindigkeiten bei Beibehaltung aller weiteren Voraussetzungen für Dosendeckel wie beispielsweise Festigkeit und Korrosionsbeständigkeit zu erzielen. Darüber hinaus werden bei dem Nachwärmprozess nicht zu hohe Temperaturen benötigt, sodass prinzipiell die Entfestigung des Aluminiumbandes während der Durchführung des erfindungsgemäßen Verfahrens gering ist.

Gemäß einer zweiten Lehre der vorliegenden Erfindung wird die oben aufgezeigte Aufgabe durch ein Aluminiumband mit einer auf das Aluminiumband extrudierten, ein- oder beidseitigen thermoplastischen Kunststoffschicht dadurch gelöst, dass die Oberfläche der Kunststoffbeschichtung des Aluminiumbandes eine nach der Beschichtung aufgebrachte isotrope Textur, vorzugsweise eine Textur einer EDT-Oberfläche aufweist.

Wie bereits zuvor ausgeführt, ist ein entsprechendes Aluminiumband besonders gut zur Herstellung von Dosendeckeln geeignet, da über die isotrope Textur oder über die EDT-Oberfläche die Gleiteigenschaften des Aluminiumbandes trotz extrudierter Kunststoffbeschichtung optimiert werden können, sodass hohe Verarbeitungsgeschwindigkeiten möglich werden.

Vorzugsweise beträgt die Rauhigkeit Rₐ der Oberfläche der thermoplastischen Kunststoffbeschichtung 0,02 µm bis 10 µm, um optimale Gleiteigenschaften im Verarbeitungsprozess des Aluminiumbandes zu gewährleisten. Die Rauigkeitsangaben beziehen sich auf Messungen der mittleren Rauigkeit Rₐ nach DIN.

Ein optimaler Kompromiss zwischen geringem Materialeinsatz, guter Verarbeitbarkeit und ausreichender Schutzwirkung gegen Korrosion wird dadurch erreicht, dass die Dicke der Extrusionsbeschichtung des Aluminiumbandes 0,2 µm bis 20 µm beträgt.

Weist die Extrusionsbeschichtung eine Polypropylen- oder eine Polypropylenblendschicht und optional eine Haftvermittlerschicht auf, können aufgrund der guten Verarbeitungseigenschaften des Polypropylens ebenfalls sehr hohe Verarbeitungsgeschwindigkeiten erzielt werden und gleichzeitig die Barrierenwirkung gegenüber korrosiven Bestandteilen der Getränkedosen durch Polypropylen genutzt werden. Das Polypropylenblend ermöglicht zusätzlich, beispielsweise spezifische Temperaturbeständigkeiten oder Festigkeiten einzustellen. Die Haftvermittlerschicht lässt sich zudem auf einfache Weise zusammen mit der Polypropylen- oder Polypropylenblendschicht coextrudieren, sodass ein besonders wirtschaftliches Verfahren zur Herstellung der Extrusionsbeschichtung des Aluminiumbandes zur Verfügung steht.

Schließlich wird die der Erfindung zugrunde liegende Aufgabe durch eine Verwendung des erfindungsgemäßen Aluminiumbandes zur Herstellung von Dosendeckeln, insbesondere Getränkedosendeckeln gelöst. Wie zuvor beschrieben, zeichnet sich das erfindungsgemäße Aluminiumband durch eine besonders gute Verarbeitbarkeit bei gleichzeitig wirtschaftlicher Herstellung und guten Festigkeits- und Korrosionseigenschaften aus.

Es gibt nun eine Vielzahl von Möglichkeiten das erfindungsgemäße Verfahren zur Herstellung eines Aluminiumbandes, ein entsprechendes Aluminiumband oder die vorteilhafte Verwendung des Aluminiumbandes auszugestalten und weiterzubilden. Hierzu wird verwiesen einerseits auf die den Patentansprüchen 1 und 11 nachgeordneten Patentansprüche sowie auf die Beschreibung zweier Ausführungsbeispiele in Verbindung mit der Zeichnung. Die Zeichnung zeigt in
- Fig. 1: eine schematische Darstellung eines ersten Ausführungsbeispiels des erfindungsgemäßen Verfahrens zur einseitigen Beschichtung eines Aluminiumbandes,
- Fig. 2: in einer schematischen Ansicht ein zweites Ausführungsbeispiel des erfindungsgemäßen Verfahrens zur zweiseitigen Beschichtung eines Aluminiumbandes,
- Fig. 3a) und b): ein drittes Ausführungsbeispiel eines erfindungsgemäßen Aluminiumbandes in einer
schematischen Querschnittsansicht und in einer schematischen Aufsicht.

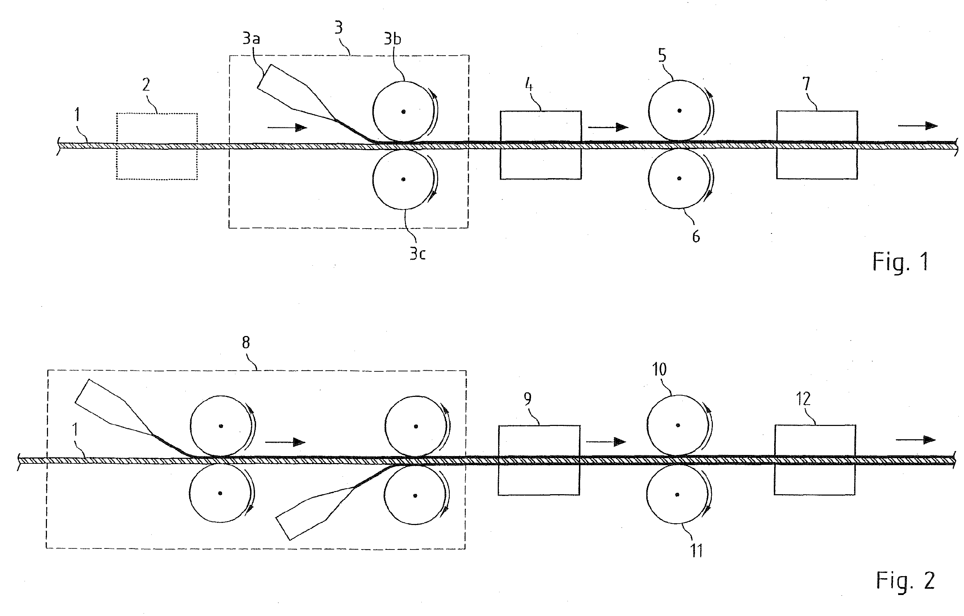

In Fig. 1 ist zunächst ein erstes Ausführungsbeispiel des erfindungsgemäßen Verfahrens zur Herstellung eines Aluminiumbandes, insbesondere eines Dosendeckelbandes aus Aluminium dargestellt. Das Aluminiumband 1 wird von einem nicht dargestellten Coil abgewickelt und kann optional einer Vorwärmung zugeführt werden. Die Vorwärmung des Aluminiumbandes 1 verbessert die Haftung einer aufextrudierten Kunststoffbeschichtung. Nach dem Vorwärmen wird das Aluminiumband zum einseitigen Extrusionsbeschichten 3 zugeführt. Die Vorrichtung zur Extrusionsbeschichtung 3 besteht aus einem Extruder 3a) und zugehörigen Auftragswalzen und Druckwalzen 3b) und 3c). Die Auftrags- und Druckwalzen 3b) und 3c) sind üblicherweise gekühlt bzw. temperiert.

Die Extrusionsvorrichtung 3a) ist in dem vorliegenden Ausführungsbeispiel so ausgeführt, dass diese eine Haftvermittlerschicht gleichzeitig mit einer thermoplastischen Kunststoffschicht coextrudieren kann. Als thermoplastische Kunststoffschicht wird vorzugsweise Polypropylen oder ein Polypropylenblend verwendet, da dieses insbesondere im Hinblick auf die Herstellung von Getränkedosendeckel vorteilhaft ist. Es ist aber auch der Einsatz von anderen Kunststoffen denkbar, welche sich auf einfache Weise extrudieren lassen und gute Beschichtungseigenschaften aufweisen, beispielsweise Polyethylene, Polyester, Polyamide oder auch Polycarbonate.

Nach dem Extrusionsbeschichten einer Seite des Aluminiumbandes wird dieses einem Nachwärmen zugeführt, welches in der Heizvorrichtung 4 stattfindet. Die Heizvorrichtung 4 kann konvektiv, induktiv oder über Wärmestrahlung eine Erwärmung des Aluminiumbandes auf eine spezifische Temperatur bewirken. In der Heizvorrichtung 4 wird das Aluminiumband 1 auf eine Temperatur erhitzt, welche oberhalb der Schmelzpunkttemperatur des verwendeten thermoplastischen Kunststoffes liegt. Im Falle von Polypropylen liegt die Schmelzpunkttemperatur bei 165 °C.

Es hat sich beispielsweise gezeigt, dass eine Erwärmung des Aluminiumbandes 1 auf eine Temperatur von mehr als 30°C oberhalb der Schmelzpunkttemperatur des verwendeten thermoplastischen Kunststoffes für eine Dauer von 0,5 bis 3 s eine optimierte Haftung des Films auf dem Aluminiumband und ein Entspannen des aufgrund der Extrusion leicht orientierten Extrusionsbeschichtung stattfindet. Gleichzeitig ist die Nachwärmtemperatur damit jedoch deutlich geringer als die bisher bei den Lacksystemen verwendete Einbrenntemperatur. So werden beispielsweise Metalltemperaturen, d.h. eine Peak-Metal-Temperatur von mehr als 165 °C, vorzugsweise etwa 210 °C bei dem erfindungsgemäßen Verfahren verwendet. Im Vergleich zu den bei Lacksystemen benötigten Temperaturen von 230 °C bis 260 °C ergibt sich hierdurch eine deutlich geringere Entfestigung des Aluminiumbandes 1 und damit eine verbesserte Festigkeit des Dosendeckelbandes. Das Verfahren eröffnet damit die Möglichkeit, auch Aluminiumbänder mit geringeren Magnesiumgehalten zur Herstellung von hochfesten Deckeln zu verwenden.

Nach dem Durchlauf des Aluminiumbandes 1 durch die Nachwärmvorrichtung 4 erfolgt die Texturierung der Kunststoffbeschichtung des Aluminiumbandes unter Verwendung einer Texturierwalze 5 und einer Druckwalze 6. Da die Druckwalze 6 nur zum Abstützen der Texturierwalze 5 dient, weist diese auch keine spezifische Textur auf, sondern ist vielmehr für einen schonenden Transport des Aluminiumbandes ausgelegt. Die Texturierwalze 5 ist temperiert und kann insofern von der Oberflächentemperatur so eingestellt werden, dass in Abhängigkeit von der Temperatur des Aluminiumbandes 1 nach dem Nachwärmen eine optimale Abformung der Walzenoberfläche in der Kunststoffbeschichtung erreicht wird. Das Temperieren der Walzen kann im Sinne der vorliegenden Erfindung sowohl ein Aufheizen der Walzen als auch ein Kühlen der Walzen umfassen, je nachdem, welche Temperatur der Texturierwalze 6 eine bessere Abformung ergibt. Die texturierte Oberfläche der Kunststoffbeschichtung besitzt deutlich verbessere Gleiteigenschaften im Hinblick auf die Verarbeitung des beschichteten Aluminiumbandes beispielsweise zu Dosendeckeln. Die mittleren Rauhigkeiten Rₐ, welche die Kunststoffbeschichtung nach der Texturierung aufweist, betragen 0,02 µm bis 10 µm. Entsprechend aufgearbeitete Oberflächen sind in den weiteren Verarbeitungsschritten, vor allem bei der Verwendung von Folgeverbundwerkzeugen zur Herstellung von Dosendeckeln, besonders gut geeignet. Es hat sich gezeigt, dass eine Texturierwalze 5, welche eine EDT-Oberfläche aufweist, besonders gute Ergebnisse im Hinblick auf die Verarbeitbarkeit des Aluminiumbandes in nachfolgenden Stanz- und Umformprozessen erzielt, da die Texturierung besonders fein, isotrop und homogen ist. Abhängig von der Temperatur des Aluminiumbandes nach dem Nachwärmprozess kann die Texturierwalze 5 gekühlt oder auf eine spezifische Temperatur erhitzt sein, um ein gutes Abformergebnis zu erzielen. Anschließend durchläuft das Aluminiumband mit der texturierten Kunststoffbeschichtung einen weiteren Kühlprozess, bei welchem das Aluminiumband 1 vorzugsweise auf Raumtemperatur unter Verwendung von Mitteln zur Luft- oder Wasserkühlung 7 gekühlt wird. Die Abkühlung erfolgt vorzugsweise unmittelbar nach dem Texturieren der Oberfläche des beschichteten Aluminiumbandes, so dass die Texturierung durch den Transport des Bandes, beispielsweise über weitere Walzen, nicht beschädigt wird. Das Aufwickeln des Aluminiumbandes auf ein Coil ist in Fig. 1 nicht dargestellt.

Das Ausführungsbeispiel, welches in Fig. 2 dargestellt ist, unterscheidet sich von dem in Fig. 1 dargestellten Ausführungsbeispiel nicht nur dadurch, dass die Extrusionsbeschichtungsvorrichtung 8 eine beidseitige Extrusionsbeschichtung des Aluminiumbandes 1 erzeugt. Das Aluminiumband 1 durchläuft die Extrusionsbeschichtung auch in nicht vorgewärmten Zustand. Es hat sich gezeigt, dass sich durch eine gezielte Bearbeitung der Oberfläche des Aluminiumbandes vor dem eigentlichen Extrusionsbeschichten auf ein Vorwärmprozess verzichtet werden kann, ohne dass die Haftung einer Extrusionsbeschichtung auf dem Aluminiumband 1 verschlechtert wird. Hierzu muss das Aluminiumband nach dem Herstellprozess entfettet werden und anschließend einem Beizschritt unterzogen werden. Das Beizen erfolgt sauer oder alkalisch und beizt die Oberfläche des Aluminiumbandes samt Aluminiumoxide, welche durch den Walzprozess auf der Oberfläche entstehen. Die anschließende Ausbildung eines dünnen Aluminiumoxidfilms auf der Oberfläche des Aluminiumbandes erzeugt eine sehr gleichmäßige Oberfläche für die Konversionsbehandlung. Anschließend wird das Aluminiumband einer Vorbehandlung unterzogen, bei welcher beispielsweise eine Konversionsschicht aufgebracht wird, die anschließend bei etwa 80-150 °C getrocknet bzw. aktiviert wird. Das Auftragen der Konversionsschicht erfolgt durch Aufspritzen, Aufwalzen oder durch eine Tauchbehandlung. Alternativ zu der Konversionsbeschichtung des Aluminiumbandes kann auch eine Anodisierung der Aluminiumbandoberfläche erfolgen.

Ein so behandeltes Aluminiumband hat auch ohne ein Vorwärmen vor der Extrusionsbeschichtung ausreichende Hafteigenschaften für die aufextrudierte Kunststoffschicht. Die Extrusionsvorrichtung 8 coextrudiert vorzugsweise eine Polypropylen- bzw. Polypropylenblendschicht zusammen mit einer Haftvermittlerschicht auf die Aluminiumbandoberfläche, wobei die Haftvermittlerschicht, die Hafteigenschaften zusätzlich verbessert.

In dem Ausführungsbeispiel der Fig. 2 wird die Extrusionsbeschichtung beider Aluminiumbandoberflächen in der Extrusionsbeschichtungsvorrichtung 8 sequenziell durchgeführt. Denkbar ist aber auch ein gleichzeitiges Aufbringen der Extrusionsschicht auf dem Aluminiumband 1. Zwischen den einzelnen Extrusionsschritten ist es aber auch denkbar, weitere Kühlschritte zur optimalen Temperaturführung des Aluminiumbandes 1 vorzusehen. Anschließend durchläuft das Aluminiumband 1 wieder eine Nachwärmvorrichtung 9, in welcher das Aluminiumband 1 auf eine PMT oberhalb der Schmelzpunkttemperatur erwärmt wird. Vorzugsweise wird bei einer Polypropylenbeschichtung eine PMT von 210 °C für 0,5 bis 3 Sekunden erreicht. Durch das kurze Anschmelzen der Polypropylenschicht am Alumiumband 1 wird eine gute Haftung erzielt. Die Oberfläche der Polypropylenbeschichtung glättet sich aber bei diesen Temperaturen, sodass die Gleiteigenschaften des Alumiumbandes 1 in der nachfolgenden Weiterverarbeitung nicht optimal ist.

Hierzu durchläuft das Aluminiumband 1 ein Texturierwalzenpaar 10, 11. Die Texturierwalzen 10 und 11 weisen beide eine Textur auf der Walzenoberfläche auf, sodass diese während des Durchlaufs des Aluminiumband 1 in die noch warme Kunststoffschicht eingeprägt wird. Anschließend wird auch das Aluminiumband 1 einer Kühlvorrichtung 12, welche entweder Mittel zur Wasserkühlung oder Luftkühlung umfassen, zugeführt. Nicht dargestellt ist in Fig. 2, dass das extrusionsbeschichtete Aluminiumband 1 anschließend auf einem Coil aufgewickelt wird.

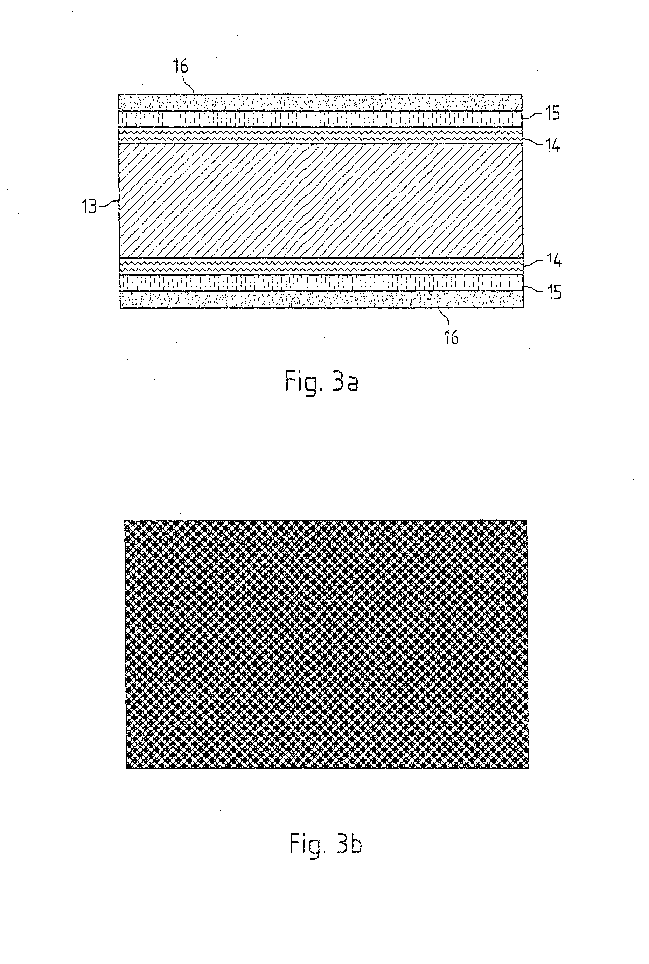

In den Fig. 3a) und 3b) ist nun in einer schematischen Schnittansicht bzw. in einer schematischen Aufsicht ein Ausführungsbeispiel eines beidseitig extrusionsbeschichteten Aluminiumbandes 13 dargestellt. In Fig. 3a) sind neben dem Aluminiumband 13 die Konversionsschicht 14, die Haftvermittlerschicht 15 und die Polypropylenschicht 16 dargestellt. Die Haftvermittlerschicht 15 und die Polypropylenschicht 16 sind dabei, wie bereits ausgeführt, gemeinsam coextrudiert worden. Im Unterschied zu den bisher bekannten Aluminiumbändern zur Herstellung von Dosendeckeln weist die Kunststoffbeschichtung eine genau definierte Textur auf, mit welcher die Gleiteigenschaften der Aluminiumbandoberfläche für die weiteren Verarbeitungsschritte genau einstellbar sind.

Fig. 3b) zeigt nun schematisch die Aluminiumbandoberfläche, welche mit einer texturierten Walze, welche eine EDT-Oberfläche aufweist, texturiert wurde. EDT-Oberflächen weisen besonders homogen verteilte kreisförmige Mulden bzw. Vertiefungen auf, welche entsprechende Oberflächenstrukturen auch auf der Kunststoffbeschichtung hervorrufen. Diese Oberflächenstrukturen gewährleisten dann besonders gute Weiterverarbeitungseigenschaften des Aluminiumbandes 13 in nachfolgenden Verarbeitungsverfahren.

## Patentansprüche

1. Verfahren zur Herstellung eines beschichteten Aluminiumbandes, bei welchem das Aluminiumband von einem Coil abgewickelt und einem ein- oder beidseitigen Extrusionsbeschichten zugeführt wird, das Aluminiumband mit einem thermoplastischen Kunststoff extrusionsbeschichtet wird und das Aluminiumband nach dem Extrusionsbeschichten auf eine Metalltemperatur oberhalb der Schmelzpunkttemperatur des thermoplastischen Kunststoffes nachgewärmt wird,
**dadurch gekennzeichnet, dass** die nach dem Nachwärmen noch weiche, ein- oder beidseitige Kunststoffbeschichtung des Aluminiumbandes unter Verwendung von eine Oberflächenstruktur aufweisenden Walzen texturiert wird.

2. Verfahren nach Anspruch 1,
**dadurch gekennzeichnet, dass** die zur Texturierung verwendeten Walzen temperiert sind.

3. Verfahren nach Anspruch 1 oder 2,
**dadurch gekennzeichnet, dass** die zur Texturierung verwendeten Walzen eine isotrope Textur oder eine unter Verwendung des Elektron-Discharge-Verfahren eingebrachte EDT-Oberflächenstruktur aufweisen.

4. Verfahren nach einem der Ansprüche 1 bis 3,
**dadurch gekennzeichnet, dass** Rauigkeit Rₐ der Kunststoffbeschichtung nach der Texturierung mit den Walzen 0,02 µm bis 10 µm beträgt.

5. Verfahren nach einem der Ansprüche 1 bis 4,
**dadurch gekennzeichnet, dass** das extrusionsbeschichtete Aluminiumband nach dem Texturieren unter Verwendung einer Luft- und/oder Wasserkühlung abgekühlt wird.

6. Verfahren nach einem der Ansprüche 1 bis 5,
**dadurch gekennzeichnet, dass** die Dicke der Kunststoffbeschichtung 0,2 µm bis 20 µm beträgt.

7. Verfahren nach einem der Ansprüche 1 bis 6,
**dadurch gekennzeichnet, dass** ein Polypropylen oder ein Polypropylenblend für die Kunststoffbeschichtung verwendet wird.

8. Verfahren nach einem der Ansprüche 1 bis 7,
**dadurch gekennzeichnet, dass** das Aluminiumband vor dem ein- oder beidseitigen Extrusionsbeschichten einem Reinigen, einem Entfetten, einem Beizen sowie einer Vorbehandlung durch Aufbringen einer Konversionsschicht oder einem Anodisieren unterzogen wird.

9. Verfahren nach einem der Ansprüche 1 bis 8,
**dadurch gekennzeichnet, dass** während der Extrusionsbeschichtung neben der thermoplastischen Kunststoffbeschichtung eine Haftvermittlerschicht coextrudiert wird.

10. Verfahren nach einem der Ansprüche 1 bis 9,
**dadurch gekennzeichnet, dass** ein Verpackungsband, insbesondere für Getränkedosen, hergestellt wird.

11. Aluminiumband mit einer auf das Aluminiumband extrudierten, ein- oder beidseitigen thermoplastischen Kunststoffschicht hergestellt mit einem Verfahren nach einem der Ansprüche 1 bis 10,
**dadurch gekennzeichnet, dass** die Oberfläche der Kunststoffbeschichtung des Aluminiumbandes eine nach der Beschichtung aufgebrachte isotrope Textur, vorzugsweise eine Textur einer EDT-Oberfläche aufweist.

12. Aluminiumband nach Anspruch 11,
**dadurch gekennzeichnet, dass** die Rauigkeit der texturierten Oberfläche der thermoplastischen Kunststoffbeschichtung Rₐ 0,02 µm bis 10 µm beträgt.

13. Aluminiumband nach Anspruch 11 oder 12,
**dadurch gekennzeichnet, dass** die Extrusionsbeschichtung eine Polypropylen- oder eine Polypropylenblendschicht und optional eine Haftvermittlerschicht aufweist.

14. Aluminiumband nach einem der Ansprüche 11 bis 13,
**dadurch gekennzeichnet, dass** die Dicke der Extrusionsbeschichtung des Aluminiumbandes 0,2 µm bis 20 µm beträgt.

15. Verwendung eines Aluminiumbandes nach einem der Ansprüche 11 bis 14 zur Herstellung von starren Verpackungen oder Dosendeckeln.

## Claims

1. Method for producing a coated aluminium strip, in which the aluminium strip is unwound from a coil and fed into a unilateral or bilateral extrusion coating arrangement, the aluminium strip is extrusion coated with a thermoplastic polymer and after being extrusion coated, the aluminium strip is reheated to a metal temperature above the melting point of the thermoplastic polymer, **characterised in that** the unilateral or bilateral plastics material coating of the aluminium strip, being still soft after being reheated, is textured using rolls which have a superficial structure.

2. Method according to claim 1, **characterised in that** the rolls used for texturing are tempered.

3. Method according to either claim 1 or claim 2, **characterised in that** the rolls used for texturing have an isotropic texture or an EDT superficial structure introduced using the electron discharge method.

4. Method according to any one of claims 1 to 3, **characterised in that** the roughness Rₐ of the plastics material coating after texturing by the rolls is from 0.02 µm to 10 µm.

5. Method according to any one of claims 1 to 4, **characterised in that** after texturing, the extrusion-coated aluminium strip is cooled using an air and/or water cooling means.

6. Method according to any one of claims 1 to 5, **characterised in that** the thickness of the plastics material coating is from 0.2 µm to 20 µm.

7. Method according to any one of claims 1 to 6, **characterised in that** a polypropylene or a polypropylene blend is used for the plastics material coating.

8. Method according to any one of claims 1 to 7, **characterised in that** before being unilaterally or bilaterally extrusion coated, the aluminium strip is subjected to cleaning, degreasing, pickling and a pretreatment by applying a conversion layer or is subjected to an anodising process.

9. Method according to any one of claims 1 to 8, **characterised in that** during extrusion coating, an adhesion-promoting layer is co-extruded in addition to the thermoplastic polymer coating.

10. Method according to any one of claims 1 to 9, **characterised in that** a packaging strip, in particular for beverage cans, is produced.

11. Aluminium strip with a unilateral or bilateral thermoplastic polymer layer extruded onto the aluminium strip produced by a method according to any one of claims 1 to 10, **characterised in that** the surface of the plastics material coating of the aluminium strip has an isotropic texture applied after coating, preferably a texture of an EDT surface.

12. Aluminium strip according to claim 11, **characterised in that** the roughness Rₐ of the textured surface of the thermoplastic polymer coating is from 0.02 µm to 10 µm.

13. Aluminium strip according to either claim 11 or claim 12, **characterised in that** the extrusion coating has a polypropylene layer or a polypropylene blend layer and optionally an adhesion-promoting layer.

14. Aluminium strip according to any one of claims 11 to 13, **characterised in that** the thickness of the extrusion coating of the aluminium strip is from 0.2 µm to 20 µm.

15. Use of an aluminium strip according to any one of claims 11 to 14 for producing rigid packagings or can ends.

## Revendications

1. Procédé de fabrication d'une bande en aluminium revêtue, dans lequel la bande en aluminium est déroulée d'une bobine et acheminée vers un système de revêtement par extrusion uni- ou bilatéral, la bande en aluminium est revêtue par extrusion d'une matière plastique thermoplastique et la bande en aluminium, après son revêtement par extrusion, est réchauffée à une température de métal supérieure à la température e fusion de la matière plastique thermoplastique,
**caractérisé en ce que**
le revêtement en plastique uni- ou bilatéral encore mou après le réchauffement de la bande en aluminium est texturé en utilisant un cylindre présentant une structure superficielle.

2. Procédé selon la revendication 1,
**caractérisé en ce que**
les cylindres utilisés pour la texturation sont tempérés.

3. Procédé selon la revendication 1 ou 2,
**caractérisé en ce que**
les cylindres utilisés pour la texturation présentent une texture isotrope ou une structure superficielle EDT incorporée en utilisant le procédé de décharge électronique.

4. Procédé selon une des revendications 1 à 3,
**caractérisé en ce que**
la rugosité Rₐ du revêtement en plastique est de 0,02 µm à 10 µm après la texturation avec les cylindres.

5. Procédé selon une des revendications 1 à 4,
**caractérisé en ce que**
la bande en aluminium revêtue par extrusion est refroidie après la texturation en utilisant un refroidissement à l'air et/ou à l'eau.

6. Procédé selon une des revendications 1 à 5,
**caractérisé en ce que**
l'épaisseur du revêtement en matière plastique est de 0,02 µm à 20 µm.

7. Procédé selon une des revendications 1 à 6,
**caractérisé en ce**
**qu'**un polypropylène ou un mélange de polypropylène est employé pour le revêtement en matière plastique.

8. Procédé selon une des revendications 1 à 7,
**caractérisé en ce que**
la bande en aluminium est soumise avant son revêtement uni- ou bilatéral par extrusion à un nettoyage, un dégraissage, un mordançage et à un traitement préliminaire par application d'une couche de conversion ou d'une anodisation.

9. Procédé selon une des revendications 1 à 8,
**caractérisé en ce que**,
pendant le revêtement par extrusion, en plus du revêtement en matière plastique thermoplastique, une couche promotrice d'adhérence est coextrudée.

10. Procédé selon une des revendications 1 à 9,
**caractérisé en ce**
**qu'**une bande d'emballage, en particulier pour boîtes de boisson, est fabriquée.

11. Bande d'aluminium comportant une couche en matière plastique thermoplastique extrudée uni- ou bilatérale fabriquée par un procédé selon une des revendications 1 à 10,
**caractérisé en ce que**
la surface du revêtement en matière plastique de la bande en aluminium présente une structure isotrope appliquée après le revêtement, de préférence une texture de surface EDT.

12. Bande d'aluminium selon la revendication 11,
**caractérisé en ce que**
la rugosité de la surface texturée du revêtement en matière plastique thermoplastique Rₐ est de 0,02 µm à 10 µm.

13. Bande d'aluminium selon la revendication 11 ou 12,
**caractérisé en ce que**
le revêtement par extrusion présente une couche de polypropylène ou une couche de polypropylène mélangé et en option une couche promotrice d'adhérence.

14. Bande d'aluminium selon une des revendications 11 à 13,
**caractérisée en ce que**
l'épaisseur du revêtement par extrusion de la bande en aluminium est de 0,2 µm à 20 µm.

15. Utilisation d'une bande d'aluminium selon une des revendications 11 à 14 pour fabriquer des emballages rigides ou des couvercles de boîtes.
